# EUROPEAN PATENT SPECIFICATION

(11) **EP 3 182 772 B1**
(45) Date of publication and mention of the grant of the patent: **13.06.2018**
(21) Application number: 15832178.6
(22) Date of filing: 26.02.2015
(51) Int. Cl.: H04W 60/00, H04W 12/08, H04W 4/00, H04W 8/08, H04L 29/12

(54) **USER EQUIPMENT REGISTRATION METHOD, ENTITY AND SYSTEM AND COMPUTER STORAGE MEDIUM**
BENUTZEREINRICHTUNGSREGISTRIERUNGSVERFAHREN, EINHEIT UND SYSTEM SOWIE COMPUTERSPEICHERMEDIUM
PROCÉDÉ, ENTITÉ, SYSTÈME ET SUPPORT DE STOCKAGE INFORMATIQUE PERMETTANT L'ENREGISTREMENT D'UN ÉQUIPEMENT D'UTILISATEUR

(30) Priority: 12.08.2014 CN 201410395748
(43) Date of publication of application: 21.06.2017
(73) Proprietor: ZTE Corporation, Shenzhen, Guangdong 518057 (CN)
(72) Inventor: YANG, Kun, Shenzhen Guangdong 518057 (CN)
(74) Representative: Lavoix
(86) International application number: PCT/CN2015/073298
(87) International publication number: WO 2016/023348

(56) References cited:
- WO-A1-2013/158562
- CN-A- 102 857 908
- CN-A- 103 297 946
- US-A1- 2013 310 027
- US-A1- 2014 112 251
- US-A1- 2014 219 182
- INSTITUTE FOR INFORMATION INDUSTRY: "Device triggering using user plane", 3GPP DRAFT; S2-121511-DEVICE_TRIGGERING_USING_USER_PLA NE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava , Slovakia; 20120416 - 20120420, 11 April 2012 (2012-04-11), XP050632009, [retrieved on 2012-04-11]
- RAJESH BHALLA ET AL: "oneM2M Functional Architecture", TS-0001-FUNCTIONAL_ARCHITECTURE-V1_0_0.ZIP , ONEM2M , vol. Work Programme, Work Progr, no. version = v1.0.0 29 July 2014 (2014-07-29), pages 1-297, XP084007259, Retrieved from the Internet: URL:http://member.onem2m.org/Application/d ocumentapp/downloadimmediate/default.aspx? docID=7417 [retrieved on 2014-07-29]
- NTT DOCOMO ET AL.: '3gpp Interworking Procedure Updates (for AnnexB.6.1' ARC_9.0 MEETING, ALABAMA MOBILE (USA 06 February 2014, XP055356193 Retrieved from the Internet: <URL:http://ftp.onem2m.org/meetings/ARC/201 4%20meetings/20140217_ARC9.0_Mobile/ARC- 2014-0077R02-3GPP_Interworking_Procedure.DO C>

## Description

### TECHNICAL FIELD

The disclosure relates to the management technology of a terminal in a machine type communication (MTC) in the field of the terminal communications, and in particular to a user equipment (UE) registration method, entity, system and computer storage medium.

### BACKGROUND

The machine-to-machine/man (M2M) communication system is constituted by respective M2M nodes and an underlying network. The communication between M2M nodes is realized through the underlying network. A M2M node at least includes an application entity (AE) or a common service entity (CSE). The AE is a logic unit for executing the actual M2M application, and the CSE a logic unit for managing and serving the application. The underlying network services entity (NSE) provides services of equipment management, position serving, equipment triggering etc. for the CSE. The NSE is, for example, a home subscriber server (HSS), or a MTC inter working function (MTC-IWF) entity, etc.

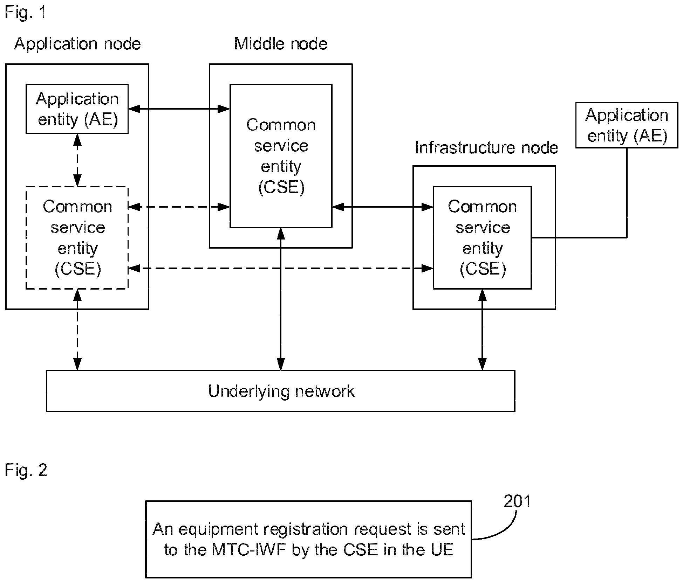

The communication between the M2M applications is realized through the interaction of CSEs. The registration of the M2M to the CSE and the registration between the CSEs are needed, so as to realize the interaction of the M2M application through the communication between the CSE. A M2M system architecture is shown in Fig. 1. In the M2M system architecture, an application node is an execution node at end of the M2M system, such as an intelligent electric meter, a temperature measurement and control sensor, a fire alarm, and an intelligent appliance etc.; a middle node (MN) is a middle element connecting the end execution node to a network side server, such as a gateway; an infrastructure node (IN) is a server at the network side, the application registered in the IN can be a management platform of the M2M service provider (SP), and the binding relationship between the M2M node and the identifier of the CSE, the identifier in the underlying network is maintained by the M2M SP.

The application node can be categorized into two types according to differences in functions: a node including the CSE and a node not including the CSE. For example, an application dedicated node (ADN) at least includes a AE, not including the CSE; and an application service node (ASN) at least includes a AE and a CSE, and the ASN or MN is physically corresponding to the UE.

In actual application, when creating, retrieving, updating or deleting operation is executed, by the application entity registered in the infrastructure node, on resources in the UE, the connection between the CSE on the ASN and the CSE in the IN is triggered to be created, or the connection between the CSE on the MN and the CSE in the IN is triggered to be created, as the server on the network side, a triggering message is transmitted through the underlying network, and the following information is provided, by the server, to the underlying network so as to trigger the UE:
1) a M2M external identifier (M2M-Ext-ID): arranged to identify the target UE of a triggering request;
2) a triggering message recipient identifier (Trigger-Recipient-ID): arranged to be the identifier for routing the triggering message to a target ASN/MN-CSE in the UE;
3) a IN-CSE identifier.

The M2M external identifier serves as one of the necessary information provided by the server to the underlying network for triggering the UE. However, in related art, there is not any effective mechanism for the IN-CSE to obtain the M2M-Ext-ID. The process of triggering the UE thus cannot be performed.

US patent No. US 2013/0310027, [1], aims to provide a method, wherein a token is logically bound to an external identifier and provided to a wireless device via triggering signaling sent to the wireless device through an access network. The wireless device is configured to send registration signaling through the access network to a service provider network, in response to the triggering signaling and to return the token in such signaling.

US patent No. US 2014/0219182, [2], describes a device triggering method which includes preparing an attach request to be sent to a network element, wherein the attach request includes an indication of a device trigger capability of a user equipment. The method also includes activating the user equipment in response to a received device trigger.

### SUMMARY

The disclosure is intended to provide a user equipment (UE) registration method, entity, system and a computer storage medium, enabling the network side server to obtain a M2M external identifier of the UE, so as to realize the triggering of the UE by the server.

The technical solution of the disclosure is implemented as follows.

An embodiment of the disclosure provides a user equipment (UE) registration method, which includes: sending, by a common service entity (CSE) in the UE, an equipment registration request to a machine type communication inter-working function entity (MTC-IWF), in which the equipment registration request includes an identifier of the UE in an underlying network, an application port identifier of the UE, an identifier of a machine-to-machine/man (M2M) service provider subscribed to by the UE, and an identifier of an application entity (AE) of the M2M service provider.

An embodiment of the disclosure further provides a CSE in the UE, in which the CSE includes:
a registration requesting unit, arranged to generate an equipment registration request; and
a first sending unit, arranged to send the registration request to the MTC-IWF, the registration request including an identifier of the UE in the underlying network, an application port identifier of the UE, an identifier of the M2M service provider subscribed to by the UE, and an identifier of the AE of the M2M service provider.

An embodiment of the disclosure further provides a MTC-IWF, which includes:
a first receiving unit, arranged to receive a registration request sent by the CSE in the UE; and
an analyzing unit, arranged to analyze the identifier of the UE in the underlying network, the application port identifier of the UE, the identifier of the M2M service provider subscribed to by the UE, and the identifier of the AE of the M2M service provider, included in the equipment registration request.

An embodiment of the disclosure further provides a CSE in a server in which the UE is registered, in which the CSE includes:
a third receiving unit, arranged to receive a registration request sent by the MTC-IWF;
an authenticating unit, arranged to authenticate the UE; and
a fourth sending unit arranged to, after the authentication of the authenticating unit is passed, send the registration request to the AE according to the identifier of the AE, in which the registration request sent by the fourth sending unit includes the M2M external identifier of the UE and the application port identifier of the UE.

An embodiment of the disclosure further provides a registration system, which includes: a MTC-IWF, a CSE in the UE and a AE of the M2M service provider subscribed to by the UE;
the CSE in the UE is arranged to send a registration request to the MTC-IWF, in which the registration request includes an identifier of the UE in the underlying network, an application port identifier of the UE, an identifier of the M2M service provider subscribed to by the UE, and an identifier of the AE of the M2M service provider; and
the MTC-IWF is arranged to receive the equipment registration request.

An embodiment of the disclosure further provides a computer storage medium which stores computer executable instructions used for executing the registration method of the UE.

In the disclosure, the equipment registration request is sent to the MTC-IWF by the CSE in the UE, the registration request including the identifier of the UE in the underlying network, the application port identifier of the UE, the identifier of the M2M service provider subscribed to by the UE, and the identifier of the AE of the M2M service provider. Thus, the M2M external identifier of the UE can be requested from the HSS by the MTC-IWF according to the identifier of the UE in the underlying network and the identifier of the M2M service provider subscribed to by the UE, and the M2M external identifier of the UE can be obtained by the CSE in the server in subsequent registration process, so as to finish the registration process of the UE and realize the triggering of the UE by the server.

### BRIEF DESCRIPTION OF THE DRAWINGS

Fig. 1 is a schematic diagram of a M2M system architecture.
Fig. 2 is a schematic diagram of a registration method according to an embodiment of the disclosure.
Fig. 3 is a structural diagram of a CSE in UE.
Fig. 4a is a structural diagram 1 of a MTC-IWF according to an embodiment of the disclosure.
Fig. 4b is a structural diagram 2 of a MTC-IWF according to an embodiment of the disclosure.
Fig. 4c is a structural diagram 3 of a MTC-IWF according to an embodiment of the disclosure.
Fig. 4d is a structural diagram 4 of a MTC-IWF according to an embodiment of the disclosure.
Fig. 4e is a structural diagram 5 of a MTC-IWF according to an embodiment of the disclosure.
Fig. 4f is a structural diagram 6 of a MTC-IWF according to an embodiment of the disclosure.
Fig. 5a is a structural diagram 1 of a CSE in a server to which a AE is registered according to an embodiment of the disclosure.
Fig. 5b is a structural diagram 2 of a CSE in a server to which a AE is registered according to an embodiment of the disclosure.
Fig. 5c is a structural diagram 3 of a CSE in a server to which a AE is registered according to an embodiment of the disclosure.
Fig. 6a is a structural diagram 1 of a registration system according to an embodiment of the disclosure.
Fig. 6b is a structural diagram 2 of a registration system according to an embodiment of the disclosure.
Fig. 6c is a structural diagram 1 of a registration system according to an embodiment of the disclosure.

### DETAILED DESCRIPTION

The purpose, technical solutions and advantages of the disclosure will be more clear and definite through the further description of the disclosure below with reference to the drawings and embodiments. It should be noted that the embodiments described here are used for illustrating the disclosure only, not limiting.

As shown in Fig. 2, an embodiment of the disclosure provides a registration method, which includes the following steps:
Step 201: an equipment registration request is sent to the MTC-IWF by the CSE in the UE. The registration request includes an identifier of the UE in the underlying network, an application port identifier of the UE, an identifier of the M2M service provider subscribed to by the UE, and an identifier of the AE of the M2M service provider.

In an embodiment, when the equipment registration request is received by the MTC-IWF, the method further includes: a subscription information request is sent to the HSS by the MTC-IWF. The subscription information request includes the identifier of the UE in the underlying network and the identifier of the M2M service provider.

In an embodiment, when the subscription information request is received by the HSS, the method further includes: a M2M external identifier of the UE is retrieved by the HSS according to the identifier of the UE in the underlying network and the identifier of M2M service provider, and then the M2M external identifier of the UE is fed back to the MTC-IWF through a subscription information response.

In an embodiment, when the subscription information response is received by the MTC-IWF, the method further includes: a registration request is sent to the CSE in the server by the MTC-IWF according to the identifier of the CSE in the server to which the AE is registered. The registration request includes the M2M external identifier of the UE, the application port identifier of the UE and the identifier of the AE.

In an embodiment, when the registration request is received by the CSE in the server, the method further includes: the UE is authenticated by the CSE in the server, and after the authentication is passed, the registration request is sent to the AE according to the identifier of the AE. The registration request includes the M2M external identifier of the UE and the application port identifier of the UE.

In an embodiment, when the registration request is received by the AE, the method further includes: the UE is verified by the AE, after the verification is passed, the binding relationship between the M2M external identifier of the UE, the application port identifier of the UE and the identifier of the CSE in the UE is determined, the registration response is sent to the CSE in the server. The registration response includes the binding relationship.

In an embodiment, when the registration response is received by the CSE in the server, the method further includes: the binding relationship and a state information of the UE are cached in the CSE of the server, an equipment registration response is sent to the UE by the MTC-IWF. The registration response includes the identifier of the CSE in the server.

In an embodiment, when the equipment registration request is received by the MTC-IWF, the method further includes: the subscription information request is sent to the HSS by the MTC-IWF. The subscription information request includes the identifier of the UE in the underlying network, the identifier of M2M service provider and the identifier of the CSE in the server to which the AE is registered.

In an embodiment, when the subscription information request is received by the HSS, the method further includes: the M2M external identifier and a routing information of the UE are retrieved by the HSS according to the identifier of the UE in the underlying network and the identifier of M2M service provider, the authentication of the CSE in the server is searched according to the identifier of the CSE in the server, and the M2M external identifier of the UE, the routing information of the UE and the authentication of the CSE in the server are fed back to the MTC-IWF through the subscription information response.

In an embodiment, when the subscription information response is received by the MTC-IWF, the method further includes:
the routing information of the UE and the authentication of CSE in the server are cached in the MTC-IWF, the registration request is sent to the CSE in the server by the MTC-IWF according to the identifier of the CSE in the server. The registration request includes the M2M external identifier of the UE, the application port identifier of the UE and the identifier of the AE.

In an embodiment, when the registration request is received by the CSE in the server, the method further includes:
the UE is authenticated by the CSE in the server, after the authentication is passed, the registration request is sent to the AE according to the identifier of the AE. The registration request includes the M2M external identifier of the UE and the application port identifier of the UE.

In an embodiment, when the registration request is received by the AE, the method further includes:
the UE is verified by the AE, after the verification is passed, the binding relationship between the M2M external identifier of the UE, the application port identifier of the UE and the identifier of the CSE in the UE is determined, the registration response is sent to the CSE in the server. The registration response includes the binding relationship.

In an embodiment, when the registration response is received by the CSE in the server, the method further includes:
the binding relationship and the state information of the UE are cached in the CSE of the server, the equipment registration response is sent to the UE by the MTC-IWF. The registration response includes the identifier of the CSE in the server.

In an embodiment, when the equipment registration response is sent, by the CSE of the server, to the UE via the MTC-IWF, the method further includes:
a resource operation request is sent to the CSE of the server by the AE, the resource operation request includes the identifier of CSE in the UE.

In an embodiment, after the resource operation request is received by the CSE of the server, the method further includes:
the state information of the UE is checked by the CSE of the server according to the identifier of the CSE in the UE, and an equipment triggering request is sent to the MTC-IWF. The equipment triggering request includes the M2M external identifier of the UE, the application port identifier of the UE and the identifier of the CSE in the server.

In an embodiment, after the equipment triggering request is received by the MTC-IWF, the method further includes:
the authentication of the CSE, the identifier and routing information of the UE in the underlying network are requested, by the MTC-IWF, from the HSS according to the identifier of CSE in the sever and the M2M external identifier of the UE, or the authentication of the CSE, the identifier and routing information of the UE in the underlying network are searched for according to the identifier of CSE in the sever and the M2M external identifier of the UE; and
a triggering process is executed in the underlying network according to the authentication of the CSE, the identifier and routing information of the UE in the underlying network, and an equipment triggering request receipt confirmation is fed back to the CSE in the sever.

An embodiment of the disclosure further discloses a computer storage medium for storing computer executable instructions, which are used for executing the registration method shown in Fig. 2.

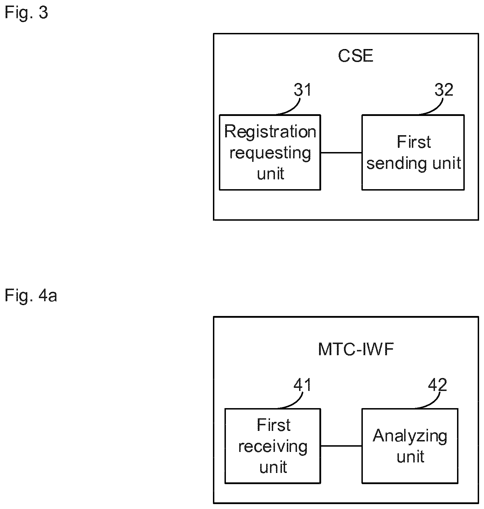

An embodiment of the disclosure further discloses a CSE in the UE, as shown in Fig. 3. The CSE includes:
a registration requesting unit 31, arranged to generate an equipment registration request;
and a first sending unit 32, arranged to send the registration request to the MTC-IWF, and the registration request includes an identifier of the UE in the underlying network, an application port identifier of the UE, an identifier of the M2M service provider subscribed to by the UE, and an identifier of the AE of the M2M service provider.

An embodiment of the disclosure further discloses a MTC-IWF, as shown in Fig. 4a, and the MTC-IWF includes:
a first receiving unit 41, arranged to receive the registration request sent by the CSE is in the UE;
and an analyzing unit 42, arranged to analyze the identifier of the UE in the underlying network, the application port identifier of the UE, the identifier of the M2M service provider subscribed to by the UE, and the identifier of the AE of the M2M service provider, included in the equipment registration request.

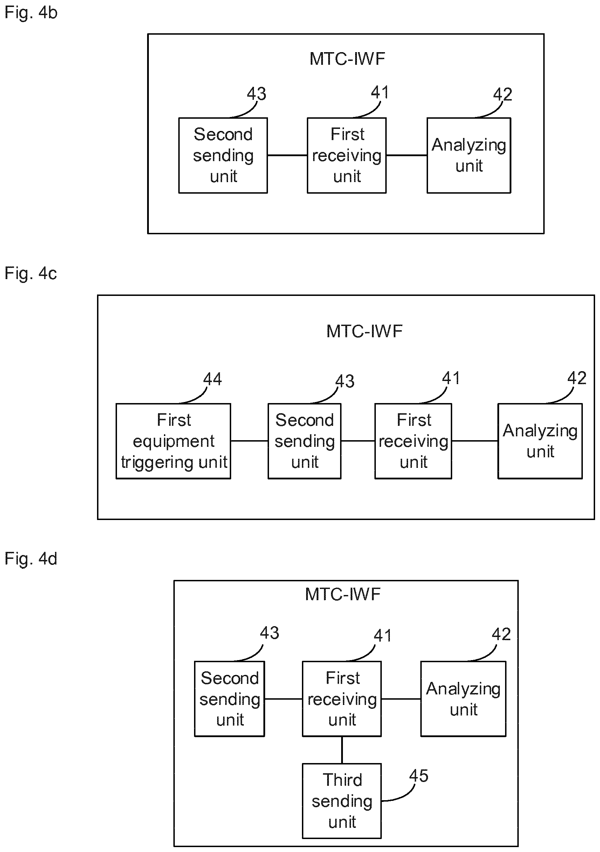

In an embodiment, as shown in Fig. 4b and based on the Fig. 4a, the MTC-IWF further includes:
a second sending unit 43, arranged to send a subscription information request to the HSS when the equipment registration request is received by the first receiving unit 41. The subscription information request includes the identifier of the UE in the underlying network and the identifier of M2M service provider.

Preferably, the first receiving unit 41 is further arranged to receive a subscription information response sent by the HSS. The subscription information response is generated when the subscription information request is received by the HSS. The subscription information response includes the M2M external identifier of the UE retrieved by the HSS according to the identifier of the UE in the underlying network and the identifier of M2M service provider.

Preferably, the second sending unit 43, is further arranged to when the subscription information response is received by the first receiving unit 41, send a registration request to the CSE in the server according to the identifier of the CSE in the server to which the AE is registered. The registration request includes the M2M external identifier of the UE, the application port identifier of the UE and the identifier of the AE.

In an embodiment, as shown in Fig. 4c and based on the Fig. 4b, the MTC-IWF further includes a first equipment triggering unit 44;
the first receiving unit 41 is further arranged to receive an equipment triggering request sent by the CSE in the server. The equipment triggering request includes the M2M external identifier of the UE, the application port identifier of the UE and the identifier of the CSE in the server;
the second receiving unit 43 is further arranged to feed back an equipment triggering request receipt conformation to the CSE in the server; and
the first equipment triggering unit 44 is arranged to execute the equipment triggering process in the underlying network according to the authentication of the CSE, the identifier and routing information of the UE in the underlying network.

In another embodiment, as shown in Fig. 4d and based on the Fig. 4b, the MTC-IWF further includes:
a third sending unit 45, arranged to send a subscription information request to the HSS when the equipment registration request is received by the first receiving unit 41. The subscription information request includes the identifier of the UE in the underlying network, the identifier of M2M service provider and the identifier of the CSE in the server to which the AE is registered;
the first receiving unit 41 is further arranged to receive a subscription information response sent by the HSS. The subscription information response includes the M2M external identifier, the routing information of the UE retrieved by the HSS according to the identifier of the UE in the underlying network and the identifier of M2M service provider, and the authentication of the CSE in the server searched for by the HSS according to the identifier of CSE in the server.

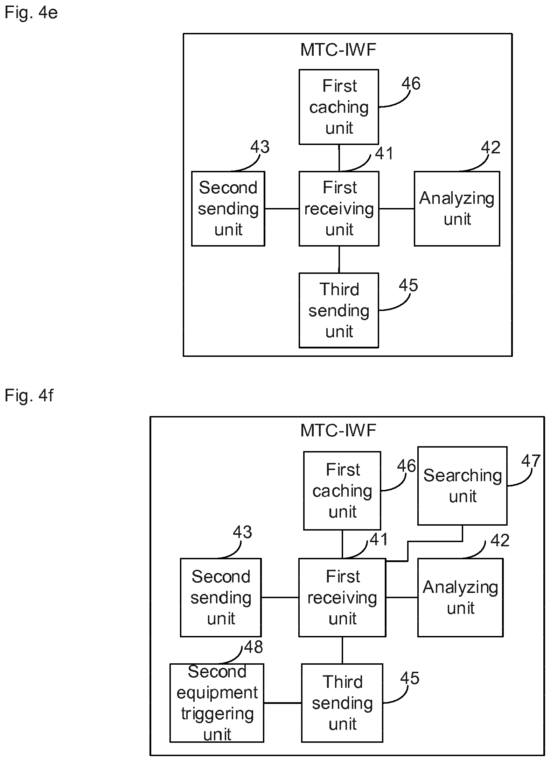

Preferably, as shown in Fig. 4e and based on the Fig. 4d, the MTC-IWF further includes a first caching unit 46, when the subscription information response is received by the first receiving unit 41, arranged to cache the routing information of the UE and the authentication of the CSE in the server; and
the third sending unit 45 is further arranged to send a registration request to the CSE in the server according to the identifier of CSE in the server. The registration request includes the M2M external identifier of the UE, the application port identifier of the UE and the identifier of the AE.

In an embodiment, as shown in Fig. 4f and based on the Fig. 4e, the first receiving unit 41 is further arranged to receive the equipment triggering request sent by the CSE in the server. The equipment triggering request includes the M2M external identifier of the UE, the application port identifier of the UE and the identifier of the CSE in the server;
the MTC-IWF further includes a searching unit 47, arranged to locally search for the authentication of the CSE, the identifier and routing information of the UE in the underlying network according to the identifier of the CSE in the server and the M2M external identifier of the UE;
the third sending unit 45 is further arranged to feed back an equipment triggering request receipt conformation to the CSE in the server; and
the MTC-IWF further includes a second equipment triggering unit 48, arranged to execute the equipment triggering process in the underlying network according to the authentication of the CSE, the identifier and routing information of the UE in the underlying network.

The MTC-IWF can be implemented by one or multiple servers in actual applications. The first receiving unit 41, the analyzing unit 42, the second sending unit 43, the first equipment triggering unit 44, the third sending unit 45, the searching unit 47 and the second equipment triggering unit 48 can be implemented by a central processing unit (CPU), a digital signal processor (DSP) or a field programmable gate array (FPGA) in the server. The first caching unit 46 can be implemented by a nonvolatile storage medium in the server.

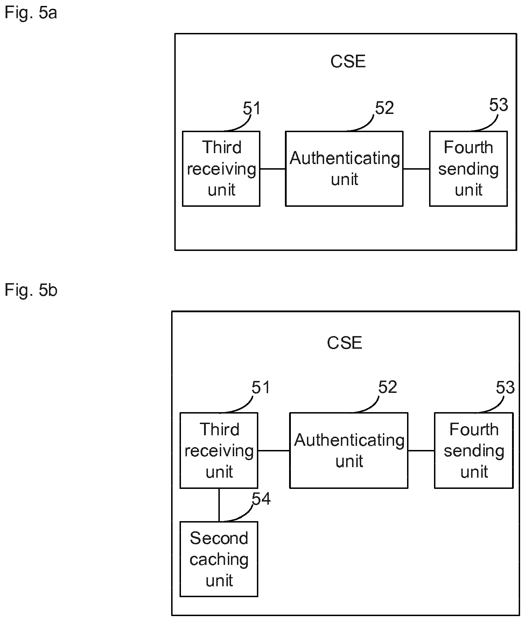

An embodiment of the disclosure further provides a CSE in a server to which the AE is registered, as shown in Fig. 5a. The CSE includes:
a third receiving unit 51, arranged to receive a registration request sent by MTC-IWF;
an authenticating unit 52, arranged to authenticate the UE; and
a fourth sending unit 53, after the authentication of the authenticating unit 52 is passed, arranged to send the registration request to the AE according to the identifier of the AE. The registration request sent by the fourth sending unit 53 includes the M2M external identifier of the UE and the application port identifier of the UE;
preferably, the third receiving unit 51 is further arranged to receive a registration response. When the registration response is received by the AE, the UE is verified, the verification is passed, the registration response is sent by the AE after the binding relationship between the M2M external identifier of the UE, the application port identifier of the UE and the identifier of the CSE in the UE is determined. The registration response includes the binding relationship between the M2M external identifier of the UE, the application port identifier of the UE and the identifier of the CSE in the UE;

As shown in Fig. 5b and based on Fig. 5a, the CSE further includes a second caching unit 54, arranged to cache the binding relationship and the state information of the UE; and
the fourth sending unit 53 is further arranged to send the equipment registration response to the UE via the MTC-IWF, and the equipment registration response includes the identifier of the CSE in the sever.

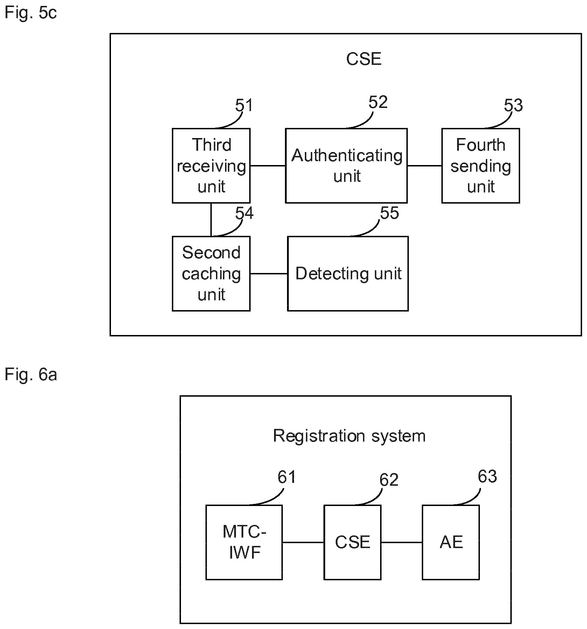

In an embodiment, the third receiving unit 51 is further arranged to receive the resource operation request, the resource operation request is sent by the AE when the equipment registration response is sent, by the fourth sending unit 53, to the UE via the MTC-IWF. The resource operation request includes the identifier of CSE in the UE;
as shown in Fig. 5c and based on Fig. 5b, the CSE further includes a detecting unit 55, arranged to detect the state information of the UE according to the identifier of the CSE in the UE; and
the fourth sending unit 53 is further arranged to send the equipment triggering request to the MTC-IWF. The equipment triggering request includes the M2M external identifier of the UE, the application port identifier of the UE and the identifier of the CSE in the server.

The CSE can be implemented by one or multiple servers in actual applications. The third receiving unit 51, the authenticating unit 52, the fourth sending unit 53 and the detecting unit 55 can be implemented by a central processing unit (CPU), a digital signal processor (DSP) or a field programmable gate array (FPGA) in the server. The second caching unit 54 can be implemented by a nonvolatile storage medium in the server.

An embodiment of the disclosure further provides a registration system, as shown in Fig. 6a. The system includes: a MTC-IWF 61, a CSE 62 in the UE and a AE 63 of the M2M service provider subscribed to by the UE;
the CSE 62 in the UE is arranged to send an equipment registration request to the MTC-IWF 61. The equipment registration request includes an identifier of the UE in the underlying network, an application port identifier of the UE, an identifier of the M2M service provider subscribed to by the UE, and an identifier of the AE 63 of the M2M service provider;
the MTC-IWF 61 is arranged to receive the equipment registration request.

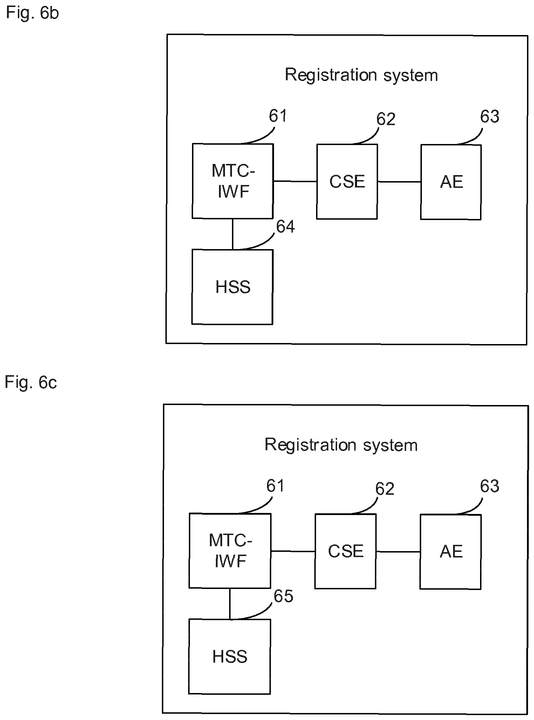

In an embodiment, as shown in Fig. 6b and based on the Fig. 6a, the system further includes a HSS 64;
the MTC-IWF 61 is further arranged to send a subscription information request to the HSS when the equipment registration request is received. The subscription information request includes the identifier of the UE in the underlying network and the identifier of M2M service provider.

In an embodiment, the HSS 64 is further arranged to, when the subscription information request is received, retrieve the M2M external identifier of the UE according to the identifier of the UE in the underlying network and the identifier of M2M service provider, and feed back the M2M external identifier of the UE to the MTC-IWF 61 through the subscription information response.

In an embodiment, the MTC-IWF 61 is further arranged to, when the subscription information response is received, send the registration request to the CSE 62 in the server according to the identifier of the CSE 62 in the server to which the AE63 is registered. The registration request includes the M2M external identifier of the UE, the application port identifier of the UE and the identifier of the AE 63.

In an embodiment, the CSE 62 in the server is further arranged to, when the registration request is received, authenticate the UE, and send the registration request to the AE 63 according to the identifier of the AE 63 after the authentication is passed. The registration request includes the M2M external identifier of the UE and the application port identifier of the UE.

In an embodiment, the AE 63 is further arranged to, when the registration request is received, verify the UE, determine the binding relationship between the M2M external identifier of the UE, the application port identifier of the UE and the identifier of the CSE 62 in the UE after the verification is passed, and send the registration response to the CSE 62 in the server. The registration response includes the binding relationship.

In an embodiment, the CSE 62 in the server is further arranged to, when the registration response is received, cache the binding relationship and the state information of the UE, send the equipment registration response to the UE via the MTC-IWF 61. The registration response includes the identifier of the CSE 62 in the server.

In an embodiment, as shown in Fig. 6c and based on the system shown in Fig. 6a, the system further includes a HSS 65;
the MTC-IWF 61 is further arranged to send the subscription information request to the HSS 65 when the equipment registration request is received; the subscription information request includes the identifier of the UE in the underlying network, the identifier of M2M service provider and the identifier of the CSE 62 in the server to which the AE 63 is registered.

In an embodiment, the HSS 65, when the subscription information request is received, is further arranged to retrieve the M2M external identifier and the routing information of the UE according to the identifier of the UE in the underlying network and the identifier of M2M service provider, search the authentication of the CSE 62 in the server according to the identifier of the CSE 62 in the server, and feed back the M2M external identifier, the routing information of the UE and the authentication of the CSE 62 in the server to the MTC-IWF 61 through the subscription information response.

In an embodiment, the MTC-IWF 61 is further arranged to cache the routing information of the UE and the authentication of the CSE 62 in the server when the subscription information response is received, and send the registration request to the CSE 62 in the server according to the identifier of the CSE 62 in the server. The registration request includes the M2M external identifier of the UE, the application port identifier of the UE and the identifier of the AE 63.

In an embodiment, the CSE 62 in the server is further arranged to authenticate the UE when the registration request is received, send the registration request to the AE 63 according to the identifier of the AE 63 after the authentication is passed. The registration request includes the M2M external identifier of the UE and the application port identifier of the UE.

In an embodiment, the AE 63 is further arranged to verify the UE when the registration request is received, determine the binding relationship between the M2M external identifier of the UE, the application port identifier of the UE and the identifier of the CSE 62 in the UE after the verification is passed, and send the registration response to the CSE 62 in the server. The registration response includes the binding relationship.

In an embodiment, the CSE 62 in the server is further arranged to cache the binding relationship and the state information of the UE when the registration response is received, send the equipment registration response to the UE through the MTC-IWF 61. The equipment registration response includes the identifier of the CSE 62 in the server.

In an embodiment, the CSE 62 in the server is further arranged to send the resource operation request to the CSE 62 in the server when the equipment registration response is sent to the UE via the MTC-IWF 61. The resource operation request includes the identifier of the CSE 62 in the server.

In an embodiment, the CSE 62 in the server is further arranged to, after the resource operation request is received, check the state information of the UE according to the identifier of the CSE 62 in the server, send the equipment triggering request to the MTC-IWF 61. The equipment triggering request includes the M2M external identifier of the UE, the application port identifier of the UE and the identifier of the CSE 62 in the server.

In an embodiment, the MTC-IWF 61 is further arranged to, when the equipment triggering request is received, request the authentication of the CSE 62, the identifier and the routing information of the UE in the underlying network from the HSS according to the identifier of the CSE 62 in the server and the M2M external identifier of the UE, or locally search for the authentication of the CSE 62, the identifier and the routing information of the UE in the underlying network according to the identifier of the CSE 62 in the server and the M2M external identifier of the UE; and
further execute the equipment triggering process according to the authentication of the CSE 62, the identifier and the routing information of the UE in the underlying network, and feed back the equipment triggering request receipt confirmation to the CSE 62 in the server.

The user equipment registration method of the disclosure is further described below with reference to specific application scenes.

In a scene 1, the user equipment registration process includes the following steps:
S701: the UE is registered in a network side server when powered on at a first time, and the equipment registration request is sent to the MTC-IWF by the CSE in the UE, the request message including following registration parameters:
   1) Device-ID: the identifier of the UE in the underlying network, such as the international mobile subscriber identity (IMSI);
   2) Trigger-Recipient-ID: trigger message recipient identifier, which is the application port identifier of the UE;
   3) M2M-SP-ID: the identifier of the M2M service provider subscribed to by the UE;
   4) AE-ID: the identifier of AE of the M2M service provider, which is the IN-AE identifier;
S702: the equipment registration request of the UE is received by the MTC-IWF, and a subscription information request is sent to the HSS by the MTC-IWF. The request message including the identifier of the UE in the underlying network and the identifier of the M2M service provider;
S703: the subscription information request sent by the MTC-IWF is received by the HSS, the M2M external identifier (M2M-Ext-ID) of corresponding UE is retrieved according to the identifier of the UE in the underlying network and the identifier of the M2M service provider, and then fed back to the MTC-IWF through the subscription information response;
   a list of one-to-one mapping relationship between the M2M external identifier of the UE and the identifier of the M2M service provider subscribed to by the UE can be created in an information storage of the HSS in application;
S704: the subscription information response sent by the HSS is received by the MTC-IWF, the identifier of the CSE in the server, to which the AE is registered, is searched for in a local information storage according to the identifier of the AE, which is the identifier of the IN-CSE, and the equipment registration request is sent to the CSE in the server according to the identifier of the CSE in the server; the request message including:
   1) M2M-Ext-ID: the M2M external identifier of the UE;
   2) Trigger-Recipient-ID: the application port identifier of the UE;
   3) AE-ID: the identifier of the AE;
S705: the equipment registration request sent by the MTC-IWF is received by the CSE in the server, after the equipment of the UE is authenticated, the registration request is sent to the AE according to the identifier of the AE; the request message including:
   1) M2M-Ext-ID: the M2M external identifier of the UE;
   2) Trigger-Recipient-ID: the application port identifier of the UE;
S706: the registration request sent by the CSE in the server is received by the AE, the binding relationship between the M2M external identifier of the UE, the trigger message recipient identifier and the identifier of the CSE in the UE is determined after the registration parameters of the UE are verified, and the registration response is fed back to the CSE in the server. The response message includes the identifier of the CSE in the UE;
   a list of the binding relationship between the identifier of the CSE in the UE, which is the ASN/MN-CSE identifier, and the external identifier of the UE, the trigger message recipient identifier can be created in the information storage of the AE in application;
S707: the registration response sent by the AE is received by the CSE in the server, and the state parameters of the UE are cached. The parameters include:
   1) CSE-ID: the identifier of the CSE in the UE;
   2) M2M-Ext-ID: the M2M external identifier of the UE;
   3) Trigger-Recipient-ID: the application port identifier of the UE;
   4) State: registration (/connection/sleep/power off/logout);
   the equipment registration response is sent to the MTC-IWF. The response message including:
   1) M2M-Ext-ID: the M2M external identifier of the UE;
   2) Local CSE-ID: the identifier of the CSE in the server;
   3) Remote CSE-ID: the identifier of the CSE in the UE (optional parameter);
S708: the equipment registration response sent by the CSE in the server is received by the MTC-IWF, then sent to the CSE in the UE according to the identifier of the UE in the underlying network. The response message including:
   1) Device-ID: the identifier of the UE in the underlying network;
   2) Remote CSE-ID: the identifier of the CSE in the server;
   3) Local CSE-ID: the identifier of the CSE in the UE (optional parameter);
S709: the equipment registration response sent by the MTC-IWF is received by the CSE in the UE, and the registration process is finished;
S710: the resource operation request is sent to the CSE in the server by the AE. The request message includes the identifier of the CSE in the UE;
S711: the information in the request message is cached by the CSE in the server, the state information of the UE is checked according to the identifier of the CSE in the UE, then the equipment triggering request is sent to the MTC-IWF. The request message includes the M2M external identifier of the UE, the application port identifier of the UE and the identifier of the CSE in the server;
S712, according to the identifier of the CSE in the server and the M2M external identifier of the UE, the authentication of the CSE, the identifier and routing information of the UE in the underlying network are requested from the HSS by the MTC-IWF, the equipment triggering request receipt conformation is fed back to the CSE in the server, and the equipment triggering process is executed in the underlying network.

In a scene 2, the user equipment registration process includes the following steps:
S801: the UE is registered in a network side server when powered on at a first time, the equipment registration request is sent to the MTC-IWF by the CSE in the UE. The request message includes following registration parameters:
   1) Device-ID: the identifier of the UE in the underlying network, such as the international mobile subscriber identity (IMSI);
   2) Trigger-Recipient-ID: trigger message recipient identifier, which is the application port identifier of the UE;
   3) M2M-SP-ID: the identifier of the M2M service provider subscribed to by the UE;
   4) AE-ID: the identifier of AE of the M2M service provider, which is the IN-AE identifier;
S802: the equipment registration request of the UE is received by the MTC-IWF, the identifier of the CSE in the server, to which the AE is registered, is searched for in an local information storage according to the identifier of the AE, which is the identifier of the IN-CSE, the subscription information request is sent to the HSS. The request message including:
   1) Device-ID: the identifier of the UE in the underlying network;
   2) M2M-SP-ID: the identifier of the M2M service provider;
   3) CSE-ID: the identifier of the CSE in the UE;
S803: the subscription information request sent by the MTC-IWF is received by the HSS, according to the identifier of the UE in the underlying network and the identifier of the M2M service provider, the M2M external identifier (M2M-Ext-ID) and routing information of corresponding UE are retrieved, the authentication of the CSE in the server is searched for according to the identifier of the CSE in the server, and then fed back to the MTC-IWF through the subscription information response;
   a list of one-to-one mapping relationship between the M2M external identifier of the UE and the identifier of the M2M service provider subscribed to by the UE can be created in an information storage of the HSS in application;
S804: the subscription information response sent by the HSS is received by the MTC-IWF, the routing information of the UE and the authentication of the CSE in the server are cached, and the equipment registration request is sent to the CSE in the server according to the identifier of the CSE in the server. The request message including:
   1) M2M-Ext-ID: the M2M external identifier of the UE;
   2) Trigger-Recipient-ID: the application port identifier of the UE;
   3) AE-ID: the identifier of the AE;
S805: the equipment registration request sent by the MTC-IWF is received by the CSE in the server, and after the equipment of the UE is authenticated, the registration request is sent to the AE according to the identifier of the AE. The request message includes:
   1) M2M-Ext-ID: the M2M external identifier of the UE;
   2) Trigger-Recipient-ID: the application port identifier of the UE;
S806: the registration request sent by the CSE in the server is received by the AE, the binding relationship between the M2M external identifier of the UE, the trigger message recipient identifier and the identifier of the CSE in the UE is determined after the registration parameters of the UE are verified, and the registration response is fed back to the CSE in the server. The response message includes the identifier of the CSE in the UE;
   the list of the binding relationship list between the identifier of the CSE in the UE, which is the ASN/MN-CSE identifier, and the external identifier of the UE, the trigger message recipient identifier can be created in the information storage of the AE in application;
S807: the registration response sent by the AE is received by the CSE in the server, and the state parameters of the UE are cached, the parameters including:
   1) CSE-ID: the identifier of the CSE in the UE;
   2) M2M-Ext-ID: the M2M external identifier of the UE;
   3) Trigger-Recipient-ID: the application port identifier of the UE;
   4) State: registration (/connection/sleep/power off/logout);
   the equipment registration response is sent to the MTC-IWF, the response message including:
   1) M2M-Ext-ID: the M2M external identifier of the UE;
   2) Local CSE-ID: the identifier of the CSE in the server;
   3) Remote CSE-ID: the identifier of the CSE in the UE (optional parameter);
S808: the equipment registration response sent by the CSE in the server is received by the MTC-IWF, then sent to the CSE in the UE according to the identifier of the UE in the underlying network. The response message including:
   1) Device-ID: the identifier of the UE in the underlying network;
   2) Remote CSE-ID: the identifier of the CSE in the server;
   3) Local CSE-ID: the identifier of the CSE in the UE (optional parameter);
S809: the equipment registration response sent by the MTC-IWF is received by the CSE in the UE, and the registration process is finished;
S810: the resource operation request is sent to the CSE in the server by the AE. The request message including the identifier of the CSE in the UE;
S811: the information in the request message is cached by the CSE in the server, the state information of the UE is checked according to the identifier of the CSE in the UE, then the equipment triggering request is sent to the MTC-IWF. The request message including the M2M external identifier of the UE, the application port identifier of the UE and the identifier of the CSE in the server;
S812: according to the identifier of the CSE in the server and the M2M external identifier of the UE, the authentication of the CSE, the identifier and routing information of the UE in the underlying network are locally searched for, the equipment triggering request receipt conformation is fed back to the CSE in the server, and the equipment triggering process is executed in the underlying network.

As mentioned above, in the disclosure, the equipment registration request is sent to the MTC-IWF by the CSE in the UE, and the registration request includes the identifier of the UE in the underlying network, the application port identifier of the UE, the identifier of the M2M service provider subscribed to by the UE, and the identifier of the AE of the M2M service provider. Thus, the M2M external identifier of the UE can be requested from the HSS by the MTC-IWF according to the identifier of the UE in the underlying network and the identifier of the M2M service provider subscribed to by the UE, and the M2M external identifier of the UE can be obtained by the CSE in the server in subsequent registration process, so as to finish the registration process of the UE and realize the triggering of the UE by the server.

It is understood by those skilled in the art that: all or part of the steps, implementing the above method, can be implemented using a hardware associated to instructions of a program. The program, which can be stored in a computer readable storage medium, is executed for performing the steps included in the method embodiment above. The storage medium includes all kinds of mediums capable of storing program codes, such as a portable storage device, a random access memory (RAM), a read-only memory (ROM), a disc or an optical disc etc.

Or, when the integrated units of the disclosure are implemented in a form of software functional modules and sold or used as independent products, it can also be stored in a computer readable storage medium. Based on this, the technical solution of the disclosure or the part contributed to related art can be embodied in a form of software product, and the computer software product is stored in a storage medium, including a number of instructions to enable a computer device (it can be a personal computer, a server or a network device etc.) to execute all or part of the method in each embodiment of the disclosure. And the storage medium includes all kinds of mediums capable of storing a program code, such as a portable storage device, a RAM, a ROM, a disc or an optical disc etc.

The above is only the detailed embodiments of the disclosure, not intent to limit the scope of protection of the disclosure, those skilled in the art can make various variations and replacements to the disclosure within the technical range of the disclosure, the variations and replacements fall within the scope of protection of the disclosure. Thus, the scope of protection of the disclosure is the scope of the claims of the disclosure.

## Claims

1. A user equipment, UE, registration method, comprising:
sending, by a common service entity, CSE, in the UE, an equipment registration request to a machine type communication inter-working function entity, MTC-IWF, (201), wherein the equipment registration request comprises an identifier of the UE in an underlying network, an application port identifier of the UE, an identifier of a machine-to-machine/man, M2M, service provider subscribed to by the UE, and an identifier of an application entity, AE, of the M2M service provider.

2. The method according to claim 1, wherein, when the equipment registration request is received by the MTC-IWF, the method further comprises:
sending, by the MTC-IWF, a subscription information request to a home subscriber server, HSS, wherein the subscription information request comprises the identifier of the UE in the underlying network and the identifier of the M2M service provider; and
retrieving, by the HSS, a M2M external identifier of the UE according to the identifier of the UE in the underlying network and the identifier of the M2M service provider, and feeding back the M2M external identifier of the UE to the MTC-IWF through a subscription information response.

3. The method according to claim 2, wherein, when the subscription information response is received by the MTC-IWF, the method further comprises:
sending, by the MTC-IWF, a registration request to a CSE in the server according to an identifier of the CSE in the server to which the AE is registered, wherein the registration request comprises the M2M external identifier of the UE, the application port identifier of the UE and the identifier of the AE;
authenticating, by the CSE in the server, the UE, and sending the registration request to the AE according to the identifier of the AE after the authentication is passed, wherein the registration request comprises the M2M external identifier of the UE and the application port identifier of the UE;
verifying, by the AE, the UE, determining the binding relationship between the M2M external identifier of the UE, the application port identifier of the UE and an identifier of the CSE in the UE after the verification is passed, and sending the registration response to the CSE in the server, wherein the registration response comprises the binding relationship; and
caching, by the CSE of the server, the binding relationship and state information of the UE, and sending an equipment registration response to the UE via the MTC-IWF, wherein the registration response comprises the identifier of the CSE in the server.

4. The method according to claim 3, wherein, when the equipment registration response is sent, by the CSE of the server, to the UE via the MTC-IWF, the method further comprises:
sending, by the AE, a resource operation request to the CSE of the server, wherein the resource operation request comprises the identifier of CSE in the UE.

5. The method according to claim 4, wherein, after the resource operation request is received by the CSE of the server, the method further comprises:
checking, by the CSE of the server, the state information of the UE according to the identifier of the CSE in the UE, and sending an equipment triggering request to the MTC-IWF, wherein the equipment triggering request comprises the M2M external identifier of the UE, the application port identifier of the UE and the identifier of the CSE in the server.

6. The method according to claim 5, wherein, after the equipment triggering request is received by the MTC-IWF, the method further comprises:
requesting, by the MTC-IWF, an authentication of the CSE, the identifier and routing information of the UE in the underlying network from the HSS according to the identifier of the CSE in the sever and the M2M external identifier of the UE, or locally searching for the authentication of the CSE, the identifier and routing information of the UE in the underlying network according to the identifier of CSE in the sever and the M2M external identifier of the UE; and
executing a triggering process in the underlying network according to the authentication of the CSE, the identifier and routing information of the UE in the underlying network, and feeding back an equipment triggering request receipt confirmation to the CSE in the sever.

7. A common service entity, CSE, (62) in a user equipment, UE, the CSE (62) comprising:
a registration requesting unit (31), arranged to generate an equipment registration request; and
a first sending unit (32), arranged to send the registration request to a machine type communication inter-working function entity, MTC-IWF, (61), the registration request comprises an identifier of the UE in the underlying network, an application port identifier of the UE, an identifier of a machine-to-machine/man, M2M, service provider subscribed to by the UE, and an identifier of an application entity, AE, (63) of the M2M service provider.

8. A machine type communication inter-working function entity MTC-IWF, (61), the MTC-IWF (61) comprises:
a first receiving unit (41), arranged to receive a registration request sent by a common service entity, CSE (62) in a user equipment, UE; and
an analyzing unit (42), arranged to analyze an identifier of the UE in an underlying network, an application port identifier of the UE, an identifier of a machine-to-machine/man, M2M, service provider subscribed to by the UE, and an identifier of an application entity, AE (63) of the M2M service provider, comprised in the equipment registration request.

9. The MTC-IWF (61) according to claim 8, wherein, the MTC-IWF (61) further comprises:
a second sending unit (43), arranged to send a subscription information request to a home subscriber server, HSS, when the equipment registration request is received by the first receiving unit (41), wherein the subscription information request comprises the identifier of the UE in the underlying network and the identifier of M2M service provider,
wherein the first receiving unit (41) is further arranged to receive a subscription information response sent by the HSS (65), wherein the subscription information response is generated when the subscription information request is received by the HSS (65); and the subscription information response comprises the M2M external identifier of the UE retrieved by the HSS (65) according to the identifier of the UE in the underlying network and the identifier of M2M service provider, and
wherein the second sending unit (43) is further arranged to send the registration request to a CSE (62) in the server according to an identifier of the CSE (62) in the server to which the AE (63) is registered when the subscription information response is received by the first receiving unit (41), wherein the registration request comprises the M2M external identifier of the UE, the application port identifier of the UE and the identifier of the AE (63).

10. A registration system, wherein the system comprises: a machine type communication inter-working function entity, MTC-IWF, (61), a common service entity, CSE, (62) set in a user equipment, UE, and an application entity, AE, (63) of a machine-to-machine/man, M2M, service provider subscribed to by the UE;
wherein the CSE (62) in the UE is arranged to send an equipment registration request to the MTC-IWF (61), the equipment registration request comprising an identifier of the UE in an underlying network, an application port identifier of the UE, an identifier of the M2M service provider subscribed to by the UE, and an identifier of the AE (63) of the M2M service provider; and
wherein the MTC-IWF (61) is arranged to receive the equipment registration request.

11. The system according to claim 10, wherein, the system further comprises a home subscriber server, HSS;
the MTC-IWF (61) is further arranged to send a subscription information request to the HSS (65) when the equipment registration request is received, wherein the subscription information request comprises the identifier of the UE in the underlying network and the identifier of M2M service provider; and
the HSS (65) is further arranged to, when the subscription information request is received, retrieve the M2M external identifier of the UE according to the identifier of the UE in the underlying network and the identifier of M2M service provider, and feed back the M2M external identifier of the UE to the MTC-IWF (61) through a subscription information response.

12. The system according to claim 11, wherein,
the MTC-IWF (61) is further arranged to, when the subscription information response is received, send the registration request to a CSE (62) in the server according to an identifier of the CSE (62) in the server to which the AE (63) is registered, wherein the registration request comprises the M2M external identifier of the UE, the application port identifier of the UE and the identifier of the AE (63);
the CSE (62) in the server is further arranged to, when the registration request is received, authenticate the UE, and send the registration request to the AE (63) according to the identifier of the AE (63) after the authentication is passed, wherein the registration request comprises the M2M external identifier of the UE and the application port identifier of the UE;
the AE (63) is further arranged to, when the registration request is received, verify the UE, determine the binding relationship between the M2M external identifier of the UE, the application port identifier of the UE and an identifier of the CSE (62) in the UE after the verification is passed, and send the registration response to the CSE (62) in the server, wherein the registration response comprises the binding relationship; and
the CSE (62) in the server is further arranged to, when the registration response is received, cache the binding relationship and the state information of the UE, send the equipment registration response to the UE via the MTC-IWF (61), wherein the registration response comprises the identifier of the CSE (62) in the server.

13. The system according to claim 12, wherein,
the AE (63) is further arranged to send a resource operation request to the CSE (62) in the server when the equipment registration response is sent to the UE via the MTC-IWF (61), wherein the resource operation request comprises the identifier of the CSE (62) in the UE.

14. The system according to claim 13, wherein,
the CSE (62) in the server is further arranged to, after the resource operation request is received, check the state information of the UE according to the identifier of the CSE (62) in the server, and send the equipment triggering request to the MTC-IWF (61), wherein the equipment triggering request comprises the M2M external identifier of the UE, the application port identifier of the UE and the identifier of the CSE (62) in the server.

15. The system according to claim 14, wherein,
the MTC-IWF (61) is further arranged to, when the equipment triggering request is received, request an authentication of the CSE (62), the identifier and routing information of the UE in the underlying network from the HSS (65) according to the identifier of the CSE (62) in the server and the M2M external identifier of the UE, or locally search for the authentication of the CSE (62), the identifier and the routing information of the UE in the underlying network according to the identifier of the CSE (62) in the server and the M2M external identifier of the UE; and
execute an equipment triggering process according to the authentication of the CSE (62), the identifier and the routing information of the UE in the underlying network, and feed back an equipment triggering request receipt confirmation to the CSE (62) in the server.

## Patentansprüche

1. Verfahren zur Registrierung von Benutzerausrüstung, UE, Folgendes umfassend:
Senden (201) einer Ausrüstungsregistrierungsanfrage an eine MTC-IWF-(Machine-Type Communication Inter-Working Function)-Entität durch eine allgemeine Dienstentität, CSE (Common Service Entity), in der UE, wobei die Ausrüstungsregistrierungsanfrage eine Kennung der UE in einem zugrundeliegenden Netzwerk, eine Anwendungsanschlusskennung der UE, eine Kennung eines von der UE abonnierten M2M-(Maschine-zu-Maschine/Mensch)-Dienstanbieters und eine Kennung einer Anwendungsentität, AE, des M2M-Dienstanbieters umfasst.

2. Verfahren nach Anspruch 1, wobei das Verfahren, wenn die Ausrüstungsregistrierungsanfrage von der MTC-IWF empfangen wird, ferner Folgendes umfasst:
Senden einer Abonnementinformationsanfrage an einen Heim-Abonnent-Server, HSS, durch die MTC-IWF, wobei die Abonnementinformationsanfrage die Kennung der UE im zugrundeliegenden Netzwerk und die Kennung des M2M-Dienstanbieters umfasst, und
Abrufen einer externen M2M-Kennung der UE gemäß der Kennung der UE im zugrundeliegenden Netzwerk und der Kennung des M2M-Dienstanbieters und Rückmelden der externen M2M-Kennung der UE zu der MTC-IWF über eine Abonnementinformationsantwort durch den HSS.

3. Verfahren nach Anspruch 2, wobei das Verfahren, wenn die Abonnementinformationsantwort durch die MTC-IWF empfangen wird, ferner Folgendes umfasst:
Senden einer Registrierungsanfrage an eine CSE im Server gemäß einer Kennung der CSE in dem Server, bei dem die AE registriert ist, durch die MTC-IWF, wobei die Registrierungsanfrage die externe M2M-Kennung der UE, die Anwendungsanschlusskennung der UE und die Kennung der AE umfasst,
Authentifizieren der UE und Senden der Registrierungsanfrage an die AE gemäß der Kennung der AE nach erfolgreicher Authentifizierung durch die CSE im Server, wobei die Registrierungsanfrage die externe M2M-Kennung der UE und die Anwendungsanschlusskennung der UE umfasst,
Bestätigen der UE, Bestimmen der bindenden Beziehung zwischen der externen M2M-Kennung der UE, der Anwendungsanschlusskennung der UE und einer Kennung der CSE in der UE nach erfolgreicher Bestätigung und Senden der Registrierungsantwort an die CSE im Server durch die AE, wobei die Registrierungsanfrage die bindende Beziehung umfasst, und
Zwischenspeichern der bindenden Beziehung und von Informationen zum Zustand der UE und Senden einer Ausrüstungsregistrierungsantwort an die UE über die MTC-IWF durch die CSE des Servers, wobei die Registrierungsantwort die Kennung der CSE im Server umfasst.

4. Verfahren nach Anspruch 3, wobei das Verfahren, wenn die Ausrüstungsregistrierungsanfrage durch die CSE des Servers über die MTC-IWF an die UE gesendet wurde, ferner Folgendes umfasst:
Senden einer Ressourcenbetriebsanfrage an die CSE des Servers durch die AE, wobei die Ressourcenbetriebsanfrage die Kennung der CSE in der UE umfasst.

5. Verfahren nach Anspruch 4, wobei das Verfahren nach dem Empfangen der Ressourcenbetriebsanfrage durch die CSE des Servers ferner Folgendes umfasst:
Prüfen der Informationen zum Zustand der UE gemäß der Kennung der CSE in der UE und Senden einer Ausrüstungsansteuerungsanfrage an die MTC-IWF durch die CSE des Servers, wobei die Ausrüstungsansteuerungsanfrage die externe M2M-Kennung der UE, die Anwendungsanschlusskennung der UE und die Kennung der CSE im Server umfasst.

6. Verfahren nach Anspruch 5, wobei das Verfahren nach dem Empfangen der Ausrüstungsansteuerungsanfrage durch die MTC-IWF ferner Folgendes umfasst:
Anfordern einer Authentifizierung der CSE, der Kennung und Routing-Informationen der UE im zugrundeliegenden Netzwerk vom HSS gemäß der Kennung der CSE im Server und der externen M2M-Kennung der UE oder lokales Suchen der Authentifizierung der CSE, der Kennung und Routing-Informationen der UE im zugrundeliegenden Netzwerk gemäß der Kennung der CSE im Server und der externen M2M-Kennung der UE durch die MTC-IWF und
Ausführen eines Ansteuerungsprozesses im zugrundeliegenden Netzwerk gemäß der Authentifizierung der CSE, der Kennung und der Routing-Informationen der UE im zugrundeliegenden Netzwerk und Rückmelden einer Ausrüstungsansteuerungsanfrage-Empfangsbestätigung an die CSE im Server.

7. Allgemeine Dienstentität, CSE, (62) in einer Benutzerausrüstung, UE, wobei die CSE (62) Folgendes umfasst:
eine Registrierungsanfrageeinheit (31), die dafür angeordnet ist, eine Ausrüstungsregistrierungsanfrage zu erzeugen, und
eine erste Sendeeinheit (32), die dafür angeordnet ist, die Registrierungsanfrage an eine MTC-IWF-(Machine-Type Communication Inter-Working Function)-Entität (61) zu senden, wobei die Registrierungsanfrage eine Kennung der UE in dem zugrundeliegenden Netzwerk, eine Anwendungsanschlusskennung der UE, eine Kennung eines von der UE abonnierten M2M-(Maschine-zu-Maschine/Mensch)-Dienstanbieters und eine Kennung einer Anwendungsentität, AE, (63) des M2M-Dienstanbieters umfasst.

8. MTC-IWF-(Machine-Type Communication Inter-Working Function)- Entität (61), wobei die MTC-IWF (61) Folgendes umfasst:
eine erste Empfangseinheit (41), die dafür angeordnet ist, eine von einer allgemeinen Dienstentität, CSE, (62) in einer Benutzerausrüstung, UE gesendete Registrierungsanfrage zu empfangen, und
eine Analyseeinheit (42), die dafür angeordnet ist, eine Kennung der UE in einem zugrundeliegenden Netzwerk, eine Anwendungsanschlusskennung der UE, eine Kennung eines von der UE abonnierten M2M-(Maschine-zu-Maschine/Mensch)-Dienstanbieters und eine Kennung einer Anwendungsentität, AE, (63) des M2M-Dienstanbieters zu analysieren, die in der Ausrüstungsregistrierungsanfrage enthalten sind.

9. MTC-IWF (61) nach Anspruch 8, wobei die MTC-IWF (61) ferner Folgendes umfasst:
eine zweite Sendeeinheit (43), die dafür angeordnet ist, eine Abonnementinformationsanfrage an einen Heim-Abonnent-Server, HSS, zu senden, wenn die Ausrüstungsregistrierungsanfrage durch die erste Empfangseinheit (41) empfangen wird, wobei die Abonnementinformationsanfrage die Kennung der UE im zugrundeliegenden Netzwerk und die Kennung des M2M-Dienstanbieters umfasst,
wobei die erste Empfangseinheit (41) ferner dafür angeordnet ist, eine Abonnementinformationsantwort zu empfangen, die vom HSS (65) gesendet wird, wobei die Abonnementinformationsantwort erzeugt wird, wenn die Abonnementinformationsanfrage durch den HSS (65) empfangen wird, und die Abonnementinformationsantwort die externe M2M-Kennung der UE umfasst, die vom HSS (65) gemäß der Kennung der UE im zugrundeliegenden Netzwerk und der Kennung des M2M-Dienstanbieters abgerufen wird, und
wobei die zweite Sendeeinheit (43) ferner dafür angeordnet ist, die Registrierungsanfrage gemäß einer Kennung der CSE (62) im Server, bei dem die AE (63) registriert ist, an eine CSE (62) im Server zu senden, wenn die Abonnementinformationsantwort durch die erste Empfangseinheit (41) empfangen wird, wobei die Registrierungsanfrage die externe M2M-Kennung der UE, die Anwendungsanschlusskennung der UE und die Kennung der AE (63) umfasst.

10. Registrierungssystem, wobei das System Folgendes umfasst: eine MTC-IWF-(Machine-Type Communication Inter-Working Function)-Entität (61), eine allgemeine Dienstentität, CSE, (62), die in einer Benutzerausrüstung, UE, eingestellt ist, und eine Anwendungsentität, AE (63) eines von der UE abonnierten M2M-(Maschine-zu-Maschine/Mensch)-Dienstanbieters,
wobei die CSE (62) in der UE dafür angeordnet ist, eine Ausrüstungsregistrierungsanfrage an die MTC-IWF (61) zu senden, wobei die Ausrüstungsregistrierungsanfrage eine Kennung der UE in einem zugrundeliegenden Netzwerk, eine Anwendungsanschlusskennung der UE, eine Kennung des von der UE abonnierten M2M-(Maschine-zu-Maschine/Mensch)-Dienstanbieters und eine Kennung einer Anwendungsentität, AE, (63) des M2M-Dienstanbieters umfasst und
wobei die MTC-IWF (61) dafür angeordnet ist, die Ausrüstungsregistrierungsanfrage zu empfangen.

11. System nach Anspruch 10, wobei das System ferner einen Heim-Abonnent-Server, HSS, umfasst, wobei:
die MTC-IWF (61) ferner dafür angeordnet ist, eine Abonnementinformationsanfrage an den HSS (65) zu senden, wenn die Ausrüstungsregistrierungsanfrage empfangen wird, wobei die Abonnementinformationsanfrage die Kennung der UE im zugrundeliegenden Netzwerk und die Kennung des M2M-Dienstanbieters umfasst, und
der HSS (65) ferner dafür angeordnet ist, die externe M2M-Kennung der UE gemäß der Kennung der UE im zugrundeliegenden Netzwerk und der Kennung des M2M-Dienstanbieters abzurufen und die externe M2M-Kennung der UE an die MTC-IWF (61) durch eine Abonnementinformationsantwort rückzumelden, wenn die Abonnementinformationsanfrage empfangen wird.

12. System nach Anspruch 11, wobei:
die MTC-IWF (61) ferner dafür angeordnet ist, gemäß einer Kennung der CSE (62) in dem Server, bei dem die AE (63) registriert ist, die Registrierungsanfrage an die CSE (62) im Server zu senden, wenn die Abonnementinformationsantwort empfangen wird, wobei die Registrierungsanfrage die externe M2M-Kennung der UE, die Anwendungsanschlusskennung der UE und die Kennung der AE (63) umfasst,
die CSE (62) im Server ferner dafür angeordnet ist, die UE zu authentifizieren und die Registrierungsanfrage gemäß der Kennung der AE (63) nach erfolgreicher Authentifizierung an die AE (63) zu senden, wenn die Registrierungsanfrage empfangen wird, wobei die Registrierungsanfrage die externe M2M-Kennung der UE und die Anwendungsanschlusskennung der UE umfasst,
die AE (63) ferner dafür angeordnet ist, wenn die Registrierungsanfrage empfangen wird, die UE zu bestätigen, nach erfolgreicher Bestätigung die bindende Beziehung zwischen der externen M2M-Kennung der UE, der Anwendungsanschlusskennung der UE und einer Kennung der CSE (62) in der UE zu bestimmen und die Registrierungsantwort an die CSE (62) im Server zu senden, wobei die Registrierungsanfrage die bindende Beziehung umfasst, und
die CSE (62) im Server ferner dafür angeordnet ist, die bindende Beziehung und die Informationen zum Zustand der UE zwischenzuspeichern und die Ausrüstungsregistrierungsantwort an die UE über die MTC-IWF (61) zu senden, wenn die Registrierungsantwort empfangen wird, wobei die Registrierungsantwort die Kennung der CSE (62) im Server umfasst.

13. System nach Anspruch 12, wobei:
die AE (63) ferner dafür angeordnet ist, eine Ressourcenbetriebsanfrage an die CSE (62) im Server zu senden, wenn die Ausrüstungsregistrierungsanfrage an die UE über die MTC-IWF (61) gesendet wird, wobei die Ressourcenbetriebsanfrage die Kennung der CSE (62) in der UE umfasst.

14. System nach Anspruch 13, wobei:
die CSE (62) im Server ferner dafür angeordnet ist, nach dem Empfangen der Ressourcenbetriebsanfrage die Informationen zum Zustand der UE gemäß der Kennung der CSE (62) im Server zu prüfen und die Ausrüstungsansteuerungsanfrage an die MTC-IWF (61) zu senden, wobei die Ausrüstungsansteuerungsanfrage die externe M2M-Kennung der UE, die Anwendungsanschlusskennung der UE und die Kennung der CSE (62) im Server umfasst.

15. System nach Anspruch 14, wobei:
die MTC-IWF (61) ferner dafür angeordnet ist, eine Authentifizierung der CSE (62), die Kennung und Routing-Informationen der UE im zugrundeliegenden Netzwerk gemäß der Kennung der CSE (62) im Server und der externen M2M-Kennung der UE vom HSS (65) anzufordern oder die Authentifizierung der CSE (62), die Kennung und die Routing-Informationen der UE im zugrundeliegenden Netzwerk gemäß der Kennung der CSE (62) im Server und der externen M2M-Kennung der UE lokal zu suchen, wenn die Ausrüstungsansteuerungsanfrage empfangen wird, und
einen Ausrüstungsansteuerungsprozess gemäß der Authentifizierung der CSE (62), der Kennung und der Routing-Informationen der UE im zugrundeliegenden Netzwerk auszuführen und eine Ausrüstungsansteuerungsanfrage-Empfangsbestätigung an die CSE (62) im Server rückzumelden.

## Revendications

1. Procédé d'enregistrement d'équipement d'utilisateur, UE, comprenant l'étape ci-dessous consistant à :
envoyer, par le biais d'une entité de services communs, CSE, dans l'équipement UE, une demande d'enregistrement d'équipement, à une entité fonctionnelle d'interfonctionnement de communication de type machine, MTC-IWF, (201), dans lequel la demande d'enregistrement d'équipement comprend un identifiant de l'équipement UE dans un réseau sous-jacent, un identifiant de port d'application de l'équipement UE, un identifiant d'un fournisseur de service de type « machine à machine/homme », M2M, auprès duquel l'équipement UE s'est abonné, et un identifiant d'une entité d'application, AE, du fournisseur de services de type M2M.

2. Procédé selon la revendication 1, dans lequel, lorsque la demande d'enregistrement d'équipement est reçue par l'entité MTC-IWF, le procédé comprend en outre les étapes ci-dessous consistant à :
envoyer, par le biais de l'entité MTC-IWF, une demande d'informations d'abonnement, à un serveur d'abonné domestique, HSS, dans lequel la demande d'informations d'abonnement comprend l'identifiant de l'équipement UE dans le réseau sous-jacent et l'identifiant du fournisseur de service de type M2M ; et
récupérer, par le biais du serveur HSS, un identifiant externe de type M2M de l'équipement UE selon l'identifiant de l'équipement UE dans le réseau sous-jacent et l'identifiant du fournisseur de service de type M2M, et renvoyer l'identifiant externe de type M2M de l'équipement UE à l'entité MTC-IWF, à travers une réponse d'informations d'abonnement.

3. Procédé selon la revendication 2, dans lequel, lorsque la réponse d'informations d'abonnement est reçue par l'entité MTC-IWF, le procédé comprend en outre les étapes ci-dessous consistant à :
envoyer, par le biais de l'entité MTC-IWF, une demande d'enregistrement, à une entité CSE dans le serveur, selon un identifiant de l'entité CSE dans le serveur auprès duquel l'entité AE est enregistrée, dans lequel la demande d'enregistrement comprend l'identifiant externe de type M2M de l'équipement UE, l'identifiant de port d'application de l'équipement UE et l'identifiant de l'entité AE ;
authentifier, par le biais de l'entité CSE dans le serveur, l'équipement UE, et envoyer la demande d'enregistrement à l'entité AE selon l'identifiant de l'entité AE, à l'issue de l'authentification, dans lequel la demande d'enregistrement comprend l'identifiant externe de type M2M de l'équipement UE et l'identifiant de port d'application de l'équipement UE ;
vérifier, par le biais de l'entité AE, l'équipement UE, déterminer la relation de liaison entre l'identifiant externe de type M2M de l'équipement UE, l'identifiant de port d'application de l'équipement UE, et un identifiant de l'entité CSE dans l'équipement UE à l'issue de la vérification, et envoyer la réponse d'enregistrement à l'entité CSE dans le serveur, dans lequel la réponse d'enregistrement comprend la relation de liaison ; et
mettre en mémoire cache, par le biais de l'entité CSE du serveur, la relation de liaison et des informations d'état de l'équipement UE, et envoyer une réponse d'enregistrement d'équipement à l'équipement UE par l'intermédiaire de l'entité MTC-IWF, dans lequel la réponse d'enregistrement comprend l'identifiant de l'entité CSE dans le serveur.

4. Procédé selon la revendication 3, dans lequel, lorsque la réponse d'enregistrement d'équipement est envoyée, par l'entité CSE du serveur, à l'équipement UE, par l'intermédiaire de l'entité MTC-IWF, le procédé comprend en outre l'étape ci-dessous consistant à :
envoyer, par le biais de l'entité AE, une demande d'opération de ressources, à l'entité CSE du serveur, dans lequel la demande d'opération de ressources comprend l'identifiant de l'entité CSE dans l'équipement UE.

5. Procédé selon la revendication 4, dans lequel, suite à la réception de la demande d'opération de ressources par l'entité CSE du serveur, le procédé comprend en outre l'étape ci-dessous consistant à :
vérifier, par le biais de l'entité CSE du serveur, les informations d'état de l'équipement UE selon l'identifiant de l'entité CSE dans l'équipement UE, et envoyer une demande de déclenchement d'équipement à l'entité MTC-IWF, dans lequel la demande de déclenchement d'équipement comprend l'identifiant externe de type M2M de l'équipement UE, l'identifiant de port d'application de l'équipement UE et l'identifiant de l'entité CSE dans le serveur.

6. Procédé selon la revendication 5, dans lequel, suite à la réception de la demande de déclenchement d'équipement par l'entité MTC-IWF, le procédé comprend en outre les étapes ci-dessous consistant à :
demander, par le biais de l'entité MTC-IWF, une authentification de l'entité CSE, l'identifiant et des informations d'acheminement de l'équipement UE dans le réseau sous-jacent, à partir du serveur HSS, selon l'identifiant de l'entité CSE dans le serveur et l'identifiant externe de type M2M de l'équipement UE, ou rechercher localement l'authentification de l'entité CSE, l'identifiant et des informations d'acheminement de l'équipement UE dans le réseau sous-jacent selon l'identifiant de l'entité CSE dans le serveur et l'identifiant externe de type M2M de l'équipement UE ; et
exécuter un processus de déclenchement dans le réseau sous-jacent selon l'authentification de l'entité CSE, l'identifiant et des informations d'acheminement de l'équipement UE dans le réseau sous-jacent, et renvoyer une confirmation de réception de demande de déclenchement d'équipement à l'entité CSE dans le serveur.

7. Entité de services communs, CSE, (62) dans un équipement d'utilisateur, UE, l'entité CSE (62) comprenant :
une unité de demande d'enregistrement (31), agencée de manière à générer une demande d'enregistrement d'équipement ; et
une première unité d'envoi (32) agencée de manière à envoyer la demande d'enregistrement à une entité fonctionnelle d'interfonctionnement de communication de type machine, MTC-IWF, (61), dans lequel la demande d'enregistrement comprend un identifiant de l'équipement UE dans un réseau sous-jacent, un identifiant de port d'application de l'équipement UE, un identifiant d'un fournisseur de service de type « machine à machine/homme », M2M, auprès duquel l'équipement UE s'est abonné, et un identifiant d'une entité d'application, AE, (63) du fournisseur de services de type M2M.

8. Entité de fonction d'interfonctionnement de communication de type machine, MTC-IWF, (61), dans laquelle l'entité MTC-IWF (61) comprend :
une première unité de réception (41), agencée de manière à recevoir une demande d'enregistrement envoyée par une entité de services communs, CSE, (62), dans un équipement d'utilisateur, UE ; et
une unité d'analyse (42) agencée de manière à analyser un identifiant de l'équipement UE dans un réseau sous-jacent, un identifiant de port d'application de l'équipement UE, un identifiant d'un fournisseur de service de type « machine à machine/homme », M2M, auquel l'équipement UE a souscrit, et un identifiant d'une entité d'application, AE, (63), du fournisseur de service de type M2M, inclus dans la demande d'enregistrement d'équipement.

9. Entité MTC-IWF (61) selon la revendication 8, dans laquelle l'entité MTC-IWF (61) comprend en outre :
une seconde unité d'envoi (43) agencée de manière à envoyer une demande d'informations d'abonnement à un serveur d'abonné domestique, HSS, lorsque la demande d'enregistrement d'équipement est reçue par la première unité de réception (41), dans laquelle la demande d'informations d'abonnement comprend l'identifiant de l'équipement UE dans le réseau sous-jacent et l'identifiant du fournisseur de service de type M2M ;
dans laquelle la première unité de réception (41) est en outre agencée de manière à recevoir une réponse d'informations d'abonnement envoyée par le serveur HSS (65), dans laquelle la réponse d'informations d'abonnement est générée lorsque la demande d'informations d'abonnement est reçue par le serveur HSS (65) ; et la réponse d'informations d'abonnement comprend l'identifiant externe de type M2M de l'équipement UE récupéré par le serveur HSS (65) selon l'identifiant de l'équipement UE dans le réseau sous-jacent et l'identifiant du fournisseur de service de type M2M ; et
dans laquelle la seconde unité d'envoi (43) est en outre agencée de manière à envoyer la demande d'enregistrement à une entité CSE (62) dans le serveur selon un identifiant de l'entité CSE (62) dans le serveur auprès duquel l'entité AE (63) est enregistrée, lorsque la réponse d'informations d'abonnement est reçue par la première unité de réception (41), dans laquelle la demande d'enregistrement comprend l'identifiant externe de type M2M de l'équipement UE, l'identifiant de port d'application de l'équipement UE et l'identifiant de l'entité AE (63).

10. Système d'enregistrement, dans lequel le système comprend : une entité fonctionnelle d'interfonctionnement de communication de type machine, MTC-IWF, (61), une entité de services communs, CSE, (62), définie dans un équipement d'utilisateur, UE, et une entité d'application, AE, (63), d'un fournisseur de service de type « machine à machine/homme », M2M, auprès duquel l'équipement UE s'est abonné ;
dans lequel l'entité CSE (62) dans l'équipement UE est agencée de manière à envoyer une demande d'enregistrement d'équipement à l'entité MTC-IWF (61), la demande d'enregistrement d'équipement comprenant un identifiant de l'équipement UE dans un réseau sous-jacent, un identifiant de port d'application de l'équipement UE, un identifiant du fournisseur de service de type M2M souscrit par l'équipement UE, et un identifiant de l'entité AE (63) du fournisseur de service de type M2M ; et
dans lequel l'entité MTC-IWF (61) est agencée de manière à recevoir la demande d'enregistrement d'équipement.

11. Système selon la revendication 10, dans lequel le système comprend en outre un serveur d'abonné domestique, HSS ;
l'entité MTC-IWF (61) est en outre agencée de manière à envoyer une demande d'informations d'abonnement au serveur HSS (65), lorsque la demande d'enregistrement d'équipement est reçue, dans lequel la demande d'informations d'abonnement comprend l'identifiant de l'équipement UE dans le réseau sous-jacent et l'identifiant du fournisseur de service de type M2M ; et
le serveur HSS (65) est en outre agencé de manière à, lorsque la demande d'informations d'abonnement est reçue, récupérer l'identifiant externe de type M2M de l'équipement UE selon l'identifiant de l'équipement UE dans le réseau sous-jacent et l'identifiant du fournisseur de service de type M2M, et renvoyer l'identifiant externe de type M2M de l'équipement UE à l'entité MTC-IWF (61), à travers une réponse d'informations d'abonnement.

12. Système selon la revendication 11, dans lequel,
l'entité MTC-IWF (61) est en outre agencée de manière à, lorsque la réponse d'informations d'abonnement est reçue, envoyer la demande d'enregistrement à une entité CSE (62) dans le serveur selon un identifiant de l'entité CSE (62) dans le serveur auprès duquel l'entité AE (63) est enregistrée, dans lequel la demande d'enregistrement comprend l'identifiant externe de type M2M de l'équipement UE, l'identifiant de port d'application de l'équipement UE et l'identifiant de l'entité AE (63) ;
l'entité CSE (62) dans le serveur est en outre agencée de manière à, lorsque la demande d'enregistrement est reçue, authentifier l'équipement UE, et envoyer la demande d'enregistrement à l'entité AE (63) selon l'identifiant de l'entité AE (63), à l'issue de l'authentification, dans lequel la demande d'enregistrement comprend l'identifiant externe de type M2M de l'équipement UE et l'identifiant de port d'application de l'équipement UE ;
l'entité AE (63) est en outre agencée de manière à, lorsque la demande d'enregistrement est reçue, vérifier l'équipement UE, déterminer la relation de liaison entre l'identifiant externe de type M2M de l'équipement UE, l'identifiant de port d'application de l'équipement UE et un identifiant de l'entité CSE (62) dans l'équipement UE à l'issue de la vérification, et envoyer la réponse d'enregistrement à l'entité CSE (62) dans le serveur, dans lequel la réponse d'enregistrement comprend la relation de liaison ; et
l'entité CSE (62) dans le serveur est en outre agencée de manière à, lorsque la réponse d'enregistrement est reçue, mettre en mémoire cache la relation de liaison et les informations d'état de l'équipement UE, envoyer la réponse d'enregistrement d'équipement à l'équipement UE, par l'intermédiaire de l'entité MTC-IWF (61), dans lequel la réponse d'enregistrement comprend l'identifiant de l'entité CSE (62) dans le serveur.

13. Système selon la revendication 12, dans lequel,
l'entité AE (63) est en outre agencée de manière à envoyer une demande d'opération de ressources à l'entité CSE (62) dans le serveur, lorsque la réponse d'enregistrement d'équipement est envoyée à l'équipement UE par l'intermédiaire de l'entité MTC-IWF (61), dans lequel la demande d'opération de ressources comprend l'identifiant de l'entité CSE (62) dans l'équipement UE.

14. Système selon la revendication 13, dans lequel,
l'entité CSE (62) dans le serveur est en outre agencée de manière à, après que la demande d'opération de ressources est reçue, vérifier les informations d'état de l'équipement UE selon l'identifiant de l'entité CSE (62) dans le serveur, et envoyer la demande de déclenchement d'équipement à l'entité MTC-IWF (61), dans lequel la demande de déclenchement d'équipement comprend l'identifiant externe de type M2M de l'équipement UE, l'identifiant de port d'application de l'équipement UE et l'identifiant de l'entité CSE (62) dans le serveur.

15. Système selon la revendication 14, dans lequel,
l'entité MTC-IWF (61) est en outre agencée de manière à, lorsque la demande de déclenchement d'équipement est reçue, demander une authentification de l'entité CSE (62), l'identifiant et des informations d'acheminement de l'équipement UE dans le réseau sous-jacent, à partir du serveur HSS (65), selon l'identifiant de l'entité CSE (62) dans le serveur et l'identifiant externe de type M2M de l'équipement UE, ou rechercher localement l'authentification de l'entité CSE (62), l'identifiant et les informations d'acheminement de l'équipement UE dans le réseau sous-jacent, selon l'identifiant de l'entité CSE (62) dans le serveur et l'identifiant externe de type M2M de l'équipement UE ; et
exécuter un processus de déclenchement d'équipement selon l'authentification de l'entité CSE (62), l'identifiant et les informations d'acheminement de l'équipement UE dans le réseau sous-jacent, et renvoyer une confirmation de réception de demande de déclenchement d'équipement à l'entité CSE (62) dans le serveur.
